(19)

Europäisches
Patentamt
European
Patent Office
Office européen
des brevets

(11) **EP 2 879 302 A1**

(12) **EUROPEAN PATENT APPLICATION**

(43) Date of publication:
**03.06.2015 Bulletin 2015/23**

(21) Application number: **13306636.5**

(22) Date of filing: **29.11.2013**

(51) Int Cl.:
*H04B 3/46* (2015.01)     *H04M 3/22* (2006.01)
*H04M 3/30* (2006.01)     *H04M 11/06* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **ALCATEL LUCENT
92100 Boulogne-Billancourt (FR)**

(72) Inventors:
• **Wahibi, Issam
  2018 Antwerp (BE)**
• **Drooghaag, Benoît
  2018 Antwerp (BE)**

(74) Representative: **D'Halleweyn, Nele Veerle Trees
Gertrudis et al
Arnold & Siedsma
Bezuidenhoutseweg 57
2594 AC The Hague (NL)**

(54) **Non-service-intrusive methods for performance estimation of multi-channel communication systems**

(57)     A method for estimating at least one performance parameter of a communication system with a plurality of channels between an access node and a plurality of end user nodes, said communication system being equipped with an internal crosstalk cancellation mechanism for reducing or cancelling internal crosstalk between said plurality of channels, the method comprising: collecting estimates, preferably at said access point, for at least one operational parameter of said communication system during normal operation of the communication system; and computing said at least one performance parameter based on the collected estimates for the at least one operational parameter.

Figure 5

## Description

### Field of the invention

The field of the invention relates to methods, systems, software for performance determining or estimation of multi-channel telecommunication systems and use thereof.

### Background of the invention

Multi-channel telecommunication systems, whether wired, wireless or combinations thereof are facing crosstalk phenomena between channels and/or originating from outside the system. Therefore such multi-channel telecommunication systems are equipped with crosstalk cancellation or reducing mechanisms, to be applied either partially or fully, at least targeting the internal crosstalk between channels. Crosstalk is an important factor, impacting the performance of the total system.

The operators of those multi-channel telecommunication systems, further equipped with multi-user transmission optimization mechanisms, are interested in evaluating the performance of the total system as such and further the effect of the crosstalk cancellation or reducing mechanisms.

Preferably such performance determining or estimating is not service intrusive and scalable, meaning applicable on a large part of the network up to all the channels or lines of the system or network at more or less the same time. The other challenge is to use only operational parameters which are easy to collect for instance per day/per hour or even per 15 minutes. The state of the art methods does not provide the above preferences.

### Summary of the invention

Embodiments of invention provide for non-service intrusive and scalable methods, systems, software for performance determining or estimation of multi-channel telecommunication systems and use thereof.

According to a first aspect there is provided a communication system performance estimation method for determining estimates of one or more first parameters, also called frequential vectors of a communication system and of use for estimating the performance of said communication system. The communication system has at least two channels, and is equipped with one or more mechanisms for reducing or cancelling crosstalk between said at least two channels. The determining of estimates is at least in part based on estimates of one or more second parameters, also called operational parameters, of the communication system, said second parameters being determinable during operation of said communication system. The method comprises the steps of: (1) collecting estimates of one or more second parameters; (2) computing estimates of said one or more first parameters based on said one or more second parameters.

In an embodiment thereof one of said first parameters is a measure related to the channel transfer function, and said measure is determined from one or more second parameters directly or indirectly related to the electrical length of the corresponding channel.

In another embodiment thereof, which may be combined with the previous embodiment, one of said first parameters is a measure related to the communication power used per channel, and the measure is determined from one or more second parameters related to the communication power used in the communication system, preferably the communication power used in the entire communication system. More in particular the communication power used per channel may be determined by use of a constrained optimization algorithm, taking into account said communication power used in the entire communication system as a constraint, optionally in combination with other constraints related to the standard used in said communication system.

In yet another embodiment thereof, which may advantageously combined with any one or more of the previous embodiments, one of the first parameters is a measure related to far end crosstalk between two channels, and said measure is determined based on one or more second parameters related to crosstalk coefficients between said two channels. More in particular the far end crosstalk between two channels may be determined by use of a relationship using said far end crosstalk, said crosstalk coefficients as provided and estimated values of said crosstalk coefficients, further in particular as estimated from an average far end crosstalk value, optionally said determining further being based on the first parameters as provided by the earlier described embodiments.

Preferably said one or more of said estimates of said one or more second parameters are determined during operation.

In an embodiment of the invention said one or more first parameters are useful and/or are a sufficient set for determining estimates of one or more third parameters related to the performance of the communication system, in particular the effect of said one or more mechanisms for reducing or cancelling crosstalk between said at least two channels. Typically the one or more third parameters are a bit rate and/or a noise level.

In a further embodiment the invention comprises the determining, for instance by comparing said third parameters, of the effect of said one or more mechanisms for reducing or cancelling crosstalk between said at least two channels in the presence of crosstalk on one or more of said channels originating from outside said communication system relative to a reference case wherein said crosstalk on one or more of said channels originating from outside said communication system is absent.

In a further or alternative embodiment determining the performance of said communication system is determined in the reference case wherein crosstalk between said at least two channels and crosstalk on one or more of said channels originating from outside said communication system is absent.

Embodiments of the method allow for the various scenarios described below:

(1) upon selection of the mode of operation wherein said mechanisms for reducing or cancelling crosstalk are applied only partially, one may perform the step of determining the performance of said communication system in the ideal reference case wherein crosstalk between said at least two channels and crosstalk on one or more of said channels originating from outside said communication system is absent; and/or

(2) upon selection of the mode of operation wherein said mechanisms for reducing or cancelling crosstalk are applied only partially, one may perform the step of determining the performance of said communication system in the reference case wherein all crosstalk between said at least two channels is reduced or cancelled; and/or

(3) upon selection of the mode of operation wherein said mechanisms for reducing or cancelling crosstalk are applied only partially, performing the step of determining the performance of said communication system in the reference case wherein said mechanisms for reducing or cancelling crosstalk are not applied; and/or

(4) upon selection of the mode of operation wherein said mechanisms for reducing or cancelling crosstalk are applied on all channel, performing the step of determining the performance of said communication system in the ideal reference case wherein crosstalk between said at least two channels and crosstalk on one or more of said channels originating from outside said communication system is absent; and/or

(5) upon selection of the mode of operation wherein said mechanisms for reducing or cancelling crosstalk are applied on all channel, performing the step of determining the performance of said communication system in the reference case wherein said mechanisms for reducing or cancelling crosstalk are not applied.

A second aspect of the invention is to provide a method for determining estimates of one or more third parameters ("bitrates" and/or "noise levels") related to the performance of said communication system, comprising the steps of: (1) determining estimates of one or more first parameters by any of the previous methods of the first aspect of the invention; (2) computing said estimates of one or more third parameters based on said estimates of one or more first parameters.

A third and fourth aspect of the invention is to provide respectively (i) a computer program product, operable on a processing engine, for executing any of the steps of the preceding methods claims and (ii) a non-transitory machine readable storage medium storing the computer program products of the third aspect.

A fifth aspect of the invention is to provide a performance estimation system for estimating at least one performance parameter of a communication system with a plurality of channels between an access node and a plurality of end user nodes, said communication system being equipped with an internal crosstalk cancellation mechanism for reducing or cancelling internal crosstalk between said plurality of channels. The network analyzing system comprises a measurement device configured for collecting, preferably at said access point, estimates for at least one operational parameter of said communication system during normal operation of the communication system; and a computing module configured for computing said at least one performance parameter based on the collected estimates for the at least one operational parameter.

Preferably the computing module is configured for computing a bit rate and/or a noise level, more preferably a bit rate and/or noise level for a situation where said internal crosstalk cancellation mechanism is inactive, and/or a bit rate and/or noise level for a situation where the internal crosstalk cancellation mechanism is active.

Preferably the measurement device is configured for collecting estimates for a parameter representative for an electrical length or a parameter representative for an attenuation; and a parameter representative for an actual transmitted power; and more preferably, for each pair of channels of the plurality of channels, a crosstalk coefficient representative for far-end cross talk.

Preferably, the computing module is configured for computing a set of far-end crosstalk values expressing far-end crosstalk between each pair of channels of said plurality of channels based on said at least one operational parameter; and for using said set of far-end crosstalk values for computing the at least one performance parameter for each channel.

A sixth aspect relates to a network analyzer comprising a performance estimation system of the fifth aspect of the invention.

A seventh aspect of the invention relates to the use of estimates of one or more parameters ("operational parameters") of a communication system, said second parameters being determined during operation of said communication system for estimating the performance of said communication system, the communication system having at least two channels, said communication system being equipped with one or more mechanisms for reducing or cancelling crosstalk between said at least two channels, in particular the effect of said one or more mechanisms for reducing or cancelling crosstalk between said at least two channels.

**Brief description of the figures**

The accompanying drawings are used to illustrate presently preferred non-limiting exemplary embodiments of devices of the present invention. The above and other advantages of the features and objects of the invention will become more apparent and the invention will be better understood from the following detailed description when read in conjunction with the accompanying drawings.

Figure 1 shows a potential system for which the invention can be deployed.
Figure 2 describes the steps of a prior art method with interruption of the system operation.
Figure 3 shows the computation of first parameters from second parameters.
Figure 4 shows the bit rates as estimated for a number of scenarios.
Figure 5 summarizes various method embodiments of the invention.
Figure 6 summarizes various system embodiments of the invention.

**Description of embodiments**

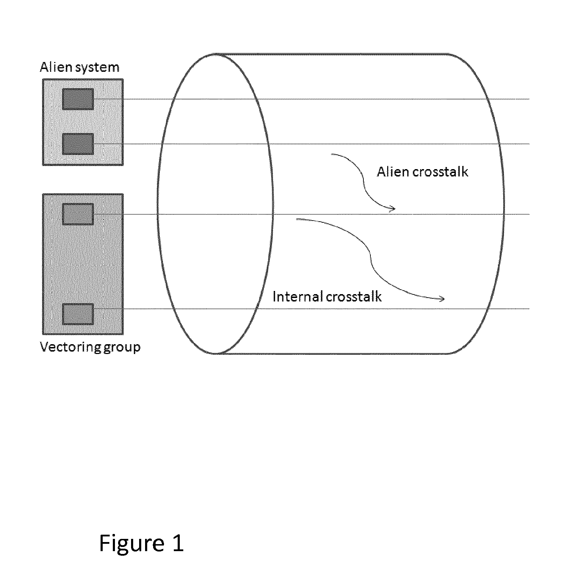

DSL operators have started to deploy the VDSL2 vectoring technology on a large scale. The vectoring technology allows performing multiuser transmission optimization and achieving higher bitrates by using internal crosstalk cancellation techniques. The internal crosstalk is the major performance constraint factor, but the performance of the DSL system can be also severely degraded in the presence of the alien crosstalk that arises from sources outside the vectoring group as illustrated in Figure 1. In downstream, a compensation signal is added to the normal transmitted signal before crossing the copper channel to compensate the crosstalk effects. In upstream, the received signal is corrected to remove these effects. The crosstalk cancellation is often carried out partially to reduce the processing complexity. The crosstalkers which have a slight impact on a given victim line will not be canceled. When vectoring is introduced on their networks, the DSL operators are interested to validate the bitrate gain brought by the vectoring technology. Therefore, they have to estimate the bitrate considering the following scenarios:

Scenario 1 (FEXT-FREE): DSL line of which all internal and alien crosstalk have been canceled (best case).
Scenario 2 (FULL-FEXT): DSL line which suffers from internal and alien crosstalk (worst case).
Scenario 3 (FULL-CANCELLATION): DSL line of which only all internal crosstalk has been canceled. This case corresponds to the full vectoring processing.

The last scenario only makes sense in the case the operators deployed a partial-cancellation vectoring system, to estimate the gap between partial and full cancellation.
To compute bitrates in the three previous scenarios, some solutions exist today, but they are service-intrusive (the service towards the customer must be interrupted for some time) and not scalable (it is not possible to apply them on all the lines of a large network at the same time).
Two existing solutions for determining the bitrates are now discussed:

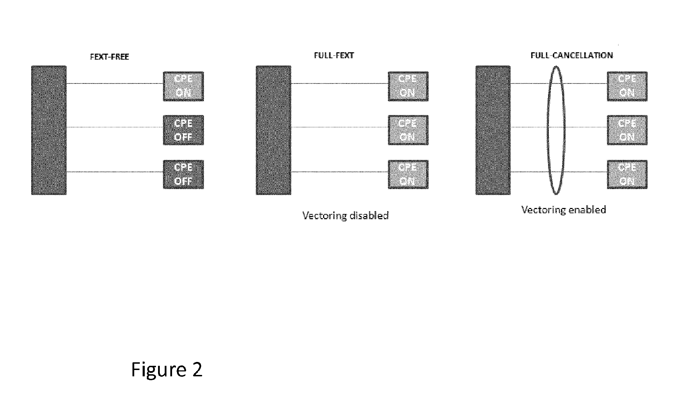

(1) "sweeper" method
As illustrated in Figure 2, a first phase consists in switching off all the CPEs, and then switching on each CPE one by one to collect the "fext-free" bitrates. Then all the CPEs are turned on together (without vectoring) such that the "full-fext" bitrates can be collected and finally vectoring is enabled, such that the "vectored" bitrates can be collected. This method has several drawbacks: the "fext-free" bitrates still include alien noise that is not quantified; and the method takes a lot of time and is service intrusive. It is therefore not realistic to apply such a method network-wide on a regular (daily) basis.
(2) "QLN-based" method
This method consists, for a given line, in comparing the QLN (Quiet-Line Noise - noise PSD in dBm/Hz) with and without cancellation, allowing to derive the vectoring gain. The QLN without cancellation is by default the one reported by the DSLAM, measured during the line initialization, when the crosstalk cancellation is not yet applied. The QLN with cancellation can be reconstructed from the TxPSD (transmitted PSD in dBm/Hz), Hlog (direct channel gain in dB) and SNR (in dB), knowing that the SNR includes the effect of the crosstalk cancellation.

$$QLN_{with\ cancellation} = TxPSD + Hlog - SNR$$

While the above equation is expressed in dB, note that any equivalent equation, for instance in a linear base, can also be used.

Once the QLN with cancellation has been computed from the previous equation, the vectoring gain can be estimated by:

$$Vectoring\ gain = \frac{1}{x.T_s} \sum_{k} QLN_{without\ cancellation\ k} - QLN_{with\ cancellation\ k}$$

where x represent the SNR offset needed to add 1 bit to the constellation (typically 3dB/bit), $T_s$ is the symbol rate, and k belongs to the used carriers set (either downstream or upstream). This method has several drawbacks as well: it only allows to estimate the gap between the actual configuration (full or partial cancellation) and a "full-fext" situation; it does not allow estimating the alien crosstalk neither the gap between full and partial cancellation; and it is normally service intrusive, since the needed QLN and Hlog are only measured during line initialization. To be sure to collect up-to-date data, a line resynchronization must be forced. This method is therefore not scalable.

Throughout the description reference is made to parameters of various kinds and in particular methods for determining those parameters are described. Those parameters can be provided (e.g. by measurement) or computed (from other provided parameters). As in both cases, the obtained values are merely estimates of the reality equivalently throughout the description the wording determining estimates of parameters is used. Further it must be understood that computing parameters from other parameters might be performed either in one step or may be based on computing intermediate parameters, depending how the computations are arranged. The invention relates obviously to all possible arrangement achieving essentially the same effect in essentially the same manner. Computation of one or more parameters from other one or more parameters requires a mathematical relationship (whether available as a direct function or as an indirect function by use of algorithms). Obviously the concerned systems, like the multi-channel telecommunication systems, are well studied and hence complex relationships are available. However those complex relationships are not suitable for use in the non-service intrusive and scalable methods the invention is targeting. The invention hence relates to careful selection of sufficiently good approximations and underlying assumptions on how certain phenomena like crosstalk will manifest themselves with such approximate models, such that the aim is achieved. As discussed before, typically not only a single (intermediate) parameter needs to be determined but often a plurality of parameters needs to be determined; so not only a single approximate model must be selected but a plurality, each of which may relate to other underlying physical aspects of the telecommunication system at hand. Embodiments of the invention relate to a careful selection of a plurality of models and intelligently combining those. As indicated the ultimate goal is to evaluate the performance (or an estimate thereof) of the telecommunication system and one or more of its related mechanisms (and even an adaptation of those mechanisms based on such performance evaluation). The performance evaluation can be expressed by a single parameter (for instance bit rate per channel or noise level per channel) or by more parameters (such as bit rate and noise level per channel).

Embodiments of the invention provide for non-service intrusive and scalable methods, systems, software for performance determining or estimation of multi-channel telecommunication systems and use thereof by performing all the above discussed considerations such that the computations can be done starting from parameters determinable during operation of the telecommunication system. Those parameters are selected in order to allow determining the telecommunication system performance either directly or indirectly via intermediate parameters.

Embodiments solve the technical problem of how to estimate the bitrates, for instance for the three previous scenarios described, in a way that does not require to interrupt the service, and based on data that can be easily collected for all lines of a large network, such that the downstream and upstream bitrates estimation can be available for all lines in all vectoring groups for the whole DSL network and updated every day. This will allow the operator to rapidly detect an anomaly in the performance on a vectoring system. The operators may even balance the performance with the processing complexity and steer the use of partial cancellation, depending of the impact of a crosstalker on a given victim line.

Embodiments of the invention relate to a communication system performance estimation method for determining estimates of one or more parameters of a communication system and of use for estimating the performance of said communication system, said determining estimates being at least in part based on estimates of one or more further parameters ("operational parameters") of said communication system, said further parameters being determinable during operation of said communication system, the method comprising the steps of (1) collecting said estimates of one or more further parameters; (2) computing estimates of said one or more parameters based on said one or more further parameters. As discussed above the one or more parameter may directly express performance or may be intermediate value, possibly with a physical meaning themselves. Further computation does not necessarily mean one single computation, but also a sequence of intermediate computations, of which those intermediate values can result. With collecting is meant inputting or loading from an available source like from a measurement device, like a network analyzer as known in this field. The available measurement devices hence determine the space of selected parameters for use in the methods.

Recall that the multi-channel telecommunication systems under consideration typically face crosstalk phenomena between channels and/or originating from outside the system and are equipped with crosstalk cancellation or reducing mechanisms, to be applied either partially or fully, at least targeting the internal crosstalk between channels. Obviously the external, also called alien crosstalk is out of the operation control and a given fact. However the use of the crosstalk mechanisms (on or off) and the extent of the use thereof (full or partial) defines different scenarios, and preferably the provided estimation methods are made to be able to compute performance or intermediate parameters for all those different scenarios, preferably by use of more or less the same computations and more or less the same operational parameters. The invention envisages such embodiments. Furthermore if the careful understanding of the problem at hand provides also a way to determine the theoretical optimal performance of the system (a case with no alien crosstalk), then the operator, equipped with the method can investigate how far off they are and whether more or less deployment of cancellation or reduction of crosstalk techniques is required. The invention also envisages such embodiments also.

In an embodiment of the invention a communication system performance estimation method is provided for determining estimates of one or more first parameters, denoted or defined as frequential vector, frequential vector being defined as a vector of elements which are corresponding to different frequencies as typically used in frequency-division multiplexing where the total available bandwidth is divided into a series of non-overlapping frequency sub-bands and each of them is able to carry a separate signal, of a communication system, preferably with at least two channels and of use for estimating the performance of said communication system, said determining estimates being at least in part based on estimates of one or more second parameters ("operational parameters") of said communication system, said second parameters being determinable during operation of said communication system, the method comprising the steps of: (1) collecting said estimates of one or more second parameters; (2) computing estimates of said one or more first parameters based on said one or more second parameters. In an implementation thereof one of said first parameters is a measure related to the channel transfer function. In an alternative implementation (preferably combinable with the previous one) one of said first parameters is a measure related to the communication power used per channel. In yet another alternative implementation (preferably combinable with the either one of the previous ones or both) one of said first parameters is a measure related to far end crosstalk between two channels.

In preferred embodiments the operational parameters are such that they are easy to collect network-wide without service interruption. This is now further illustrated by describing how the different so called frequential vectors (Hlog, TxPSD, FEXT vectors) may be estimated from operational parameters, and further there is illustrated how those can be used for evaluating system performance for instance by downstream and/or upstream bitrates computation for different scenarios (as described above related to the use or not use or extend of use of the cancellation techniques and the comparison with the theoretical optimum).

The section below illustrates the approach for VDSL systems, more in particular VDSL2 systems, even more in particular those equipped with vectoring technology. The invention is however not limited thereto.

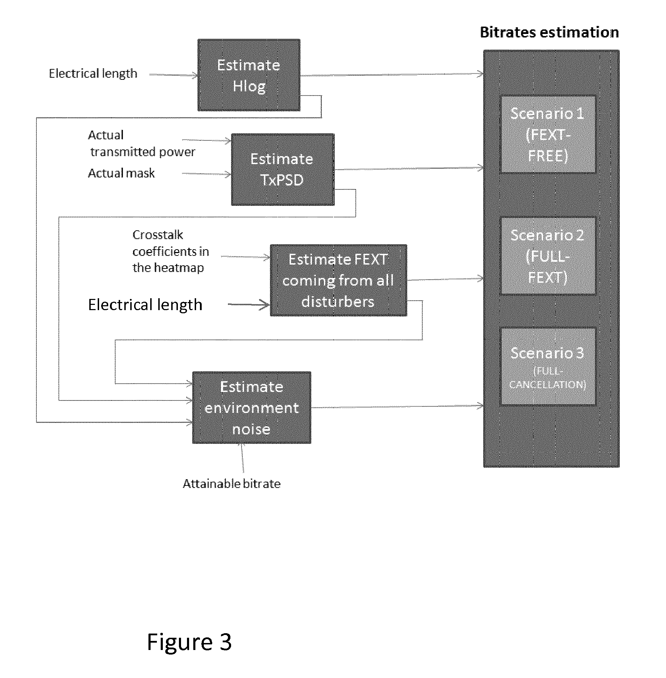

This section describes methods and algorithms that allow estimating different bitrates of all VDSL2 vectoring lines for all vectoring groups, although a selection of lines and groups is also possible. This algorithm uses only operational parameters to estimate the required frequential vectors, as illustrated in Figure 3. To be precise obviously also other parameters like standard settings and other constants related to the communication system are used. It is assumed that those are constant. The algorithm does not use parameters which may vary significantly over time and which cannot be determined during operation of the system.

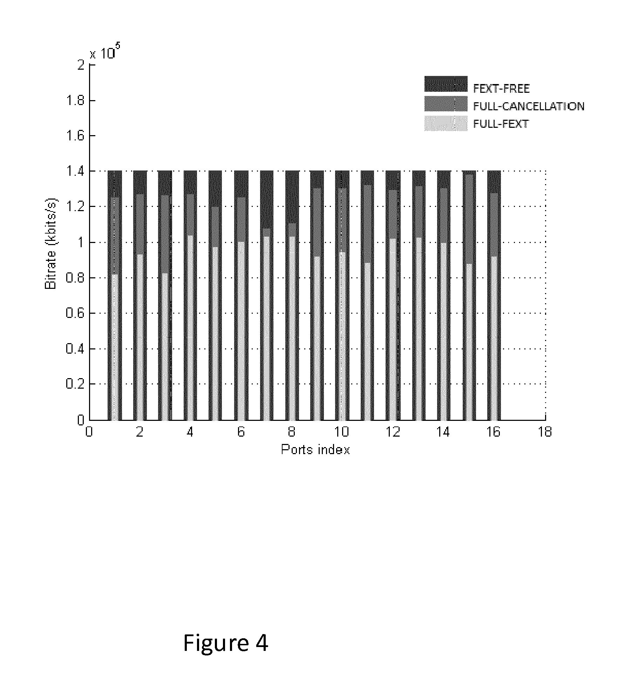

Figure 1 shows a potential system for which embodiments of the invention can be deployed and especially the concept of crosstalk for which are provided methods to determine the impact on performance, even of crosstalk alien to the system under consideration, here the vectoring group. Contrary to Figure 2, which describes the steps of a prior art method with clear interruption of the system operation, Figure 3 shows the computation of first parameters (Hlog, TxPSD, FEXT and/or environment noise) from second (operational) parameters (electrical lengths, actual transmit power and use standard information as the actual mask, the crosstalk coefficients in the heat map) and the further computation of the bitrates, for different scenarios. Figure 4 shows indexed per line, channel or port, the bit rates as estimated for their scenarios, and shows the outline of how a display interface attached to a network analyzer equipped with the provided methods may be designed. The data can be regularly updated as a system interrupt is no longer required. The update can be at once for all data or on a subset by subset basis. The frequency of updating may even differ on a subset by subset basis.

For achieving objects of embodiments of the invention the parameters are estimated using a particularly selected way as further demonstrated by the following embodiment.

(1) The direct transfer function Hlog is estimated using the electrical length EL. The loop length (meters) is proportional to the electrical length:

$$L = 1000.\frac{EL}{a}$$ with $\alpha \approx 21$**dB**/**km** (alpha is constant and dependent of the cable type)

The direct transfer function can be written as:

Hlog = 20.log10 ($|H^{ii}|$) where $\left|H^{ii}\right| = \left|e^{-k.L.\sqrt{f}}\right|$ with k a constant which depends on the cable linear attenuation factor.

In an alternative embodiment thereof Hlog is determined by use of the attenuation or loop attenuation. More generally speaking a measure related to the channel transfer function is determined or estimated, and said measure is determined from one of said second parameters directly or indirectly related to the electrical length of the corresponding channel.

(2) The total power (in dBm) can be converted to the power spectral density (PSD) (dBm/Hz) with a given PSD mask (defined in the standard), using e.g. the well-known water-filling algorithm.

In an alternative embodiment, depending on the capabilities of the used network analyzer either the receive power and/or transmit power is measured and used in the approach described above. More generally speaking a measure related to the communication power used per channel is estimated or determined, and said measure is determined from one of said second parameters related to the communication power used in the entire communication system, more in particular said communication power used per channel is determined by use of a constrained optimization algorithm, taking into account said communication power used in the entire communication system as a constraint, and optionally other constraints (related to the standard used in said communication system).

(3) The FEXT (Far-End Crosstalk) shape for each line is computed using the FEXT theoretical model:

$$FEXT\_shape = \left|H^{ii}\right|.f^2.p.L.\left(\frac{1}{49}\right)^{0.6}$$ with L the coupling length (m), p the distance conversion constant, f the frequency and $|H^{ii}|$ the direct transfer function.

The level of the FEXT is estimated using crosstalk coefficients from a heatmap or crosstalk matrix. These crosstalk coefficients represent the logarithmic average of normalized FEXT. Then, for a given victim, we are able to estimate the FEXT generated by all disturbers j on all victims i $\left|H_k^{ij}\right|$ by computing:

$$FEXT = FEXT_{shape} + \Delta \qquad\qquad (\text{Eq. 1})$$

with $\Delta$ the difference between the crosstalk coefficient in the heatmap and the estimated crosstalk coefficient computed using the average of the normalized **FEXT_shape.**

More generally speaking a measure related to far end crosstalk between two channels is determined, and said measure is determined from one of said second parameters related to crosstalk coefficients between said two channels, more in particular said far end crosstalk between two channels is determined by use of a relationship using said far end crosstalk, said crosstalk coefficients as provided and estimated values of said crosstalk coefficients, further in particular as estimated from an average far end crosstalk value, optionally said determining further being based on previously determined parameters or measures like HLog. Generally speaking the computing of one or more of said estimates of said first parameters needs to be done before computing a further one of said first parameters, so a careful arrangement thereof becomes necessary.

Below further estimation of downstream bitrates is considered to illustrate the different scenarios. The same equations can be applied for upstream bit rates estimation.

Scenario 1: DSL line whose all internal and alien crosstalk have been canceled (best case) (FREE-FEXT)

In this case, the bitrate can be expressed by:

$$R_0^i = f_s \cdot \sum_{k \in DS} \log_2 \left( 1 + \frac{[SNR_0^i]_k}{\Gamma} \right) \qquad \text{(Eq. 2)}$$

with $f_s = 4,3125kHz$ the tone space; DS the DS frequency bands (DS1,DS2 andDS3); $\Gamma$ the SNR gap (typically 9,75 dB) added to the actual noise margin; $\left[ SNR_0^i \right]_k$ the SNR for user i at tone k which can be written as:

$$\left[ SNR_0^i \right]_k = \frac{|H_k^{ii}| . TxPSD_k^i}{\sigma_k^i} \qquad \text{(Eq. 3)}$$

with $\left| H_k^{ii} \right|$ is the direct channel transfer function for user i at tone k (determined as described under section (1)); and

$TxPSD_k^i$ the transmitted PSD for user i at tone k (determined as in described under (2)); and

$\sigma_k^i$ a stationary white Gaussian noise set according to a CPE noise floor (for example -130 dBm/Hz).

Note that the bit rate (for the channel or user i) is determined from fixed constants like $f_s$ and parameters determined themselves as described above from operational parameters. Further note that the above provides a method for determining an ideal reference case, with no crosstalk (no internal and no alien).

Scenario 2: DSL line which suffers from internal and alien crosstalk (worst case) (FULL-FEXT)

In this case, the bitrate can be expressed by:

$$R_{ctk}^i = f_s \cdot \sum_{k \in DS} \log_2 \left( 1 + \frac{[SNR_{ctk}^i]_k}{\Gamma} \right) \qquad \text{(Eq. 4)}$$

with

$$\left[ SNR_0^i \right]_k = \frac{|H_k^{ii}| . TxPSD_k^i}{\sum_{all\ crosstalkers} |H_k^{ij}| . TxPSD_k^j + \widetilde{\sigma_k^i}} \qquad \text{(Eq. 5)}$$

with $\widetilde{\sigma_k^i}$ is the stationary white Gaussian noise (-130 dBm/Hz) including alien crosstalk.

In order to estimate the noise $\widetilde{\sigma_k^i}$, we may use the concept of the "number of disturbers" (Ndist) described in the patent application EP 2 383 899, included herein by reference, but any equivalent method is also possible. The noise level obtained by this method is composed by the stationary white Gaussian noise, the alien crosstalk and the crosstalk coming from non-cancelled crosstalkers.

$$FEXT_{Ndist} = \widetilde{\sigma_k^i} + \sum_{not\ canceled\ crosstalkers} |H_k^{ij}| . TxPSD_k^j \qquad \text{(Eq. 6)}$$

which results in:

$$\widetilde{\sigma_k^i} = \left|H_k^{ii}\right|.f^2.p.L.\left(\frac{Ndist}{49}\right)^{0.6} - \sum_{not\ canceled\ crosstalkers}\left|H_k^{ij}\right|.TxPSD_k^j$$

(Eq. 7)

<u>Scenario 3</u>: DSL line whose only all internal crosstalk has been canceled (FULL CANCELLATION)

In this case, the bitrate can be expressed by:

$$R_{can}^i = f_s.\sum_{k\in DS}\log_2\left(1 + \frac{\left[SNR_{can}^i\right]_k}{\Gamma}\right)$$

(Eq. 8)

with

$$\left[SNR_0^i\right]_k = \frac{\left|H_k^{ii}\right|.TxPSD_k^i}{\widetilde{\sigma_k^i}}$$

(Eq. 9)

with $\widetilde{\sigma_k^i}$ the noise estimated using (Eq. 7).

Preferably the estimation of bitrates in all scenarios includes the limitations to what the technology allows depending of different constraints (errors correction, framing, etc). More generally speaking methods are provided for determining estimates of one or more third parameters ( "bitrates" and/or "noise levels") related to the performance of said communication system, comprising the steps of: (1) determining estimates of one or more first parameters by any of the previous methods; (2) computing said estimates of one or more third parameters based on said estimates of one or more first parameters.

An example of displaying the bitrates in the three previous scenarios is illustrated in Figure 4. As it can be observed, the full-cancellation bitrates are in general close to the fext-free bitrates, meaning that vectoring performances are good, except for lines 7 and 8, where there is a significant gap between full-cancellation and fext-free bitrates. One can conclude that for those lines, the alien crosstalk has a strong impact.

Embodiments of the invention provide a solution for a long standing technical problem in that it allows DSL or equivalent operators to frequently estimate and therefore actually enable monitoring of the downstream/upstream bitrate gain brought by the deployed vectoring or equivalent technology, and further provides a method to quantify the alien noise effects in terms of performance. There is provided a way to estimate the gap in performance between full and partial crosstalk cancellation (if such are applied). This estimation can be available for all lines in all vectoring groups for the whole DSL network, and updated every day because the operational data required as inputs for this invention are easily collected on a daily basis or even more frequently. Therefore, the operators can track the evolution of the bitrate gain and take actions to enhance the line performance if necessary. The main advantage of the new solution is the possibility to estimate the frequential vectors (i.e Hlog, TxPSD, FEXT) using only operational parameters which are easily collected on daily basis from the DSLAM or network analyzer used. Another advantage is the possibility to perform bitrate estimation for vectoring lines without service interruption during all the test period. Embodiments may be completely transparent for the subscribers. This is not the case for the existing solutions which require heavy operations and/or resynchronization of lines. For sake of completeness the invention can be applied to any MIMO (Multi-Input Multi-Output) system with an interference cancellation method.

Embodiments provide a communication system performance estimation method for determining estimates of one or more first parameters ("frequential vectors") of a communication system, the communication system having at least two channels, said communication system being equipped with one or more mechanisms for reducing or cancelling crosstalk between said at least two channels, and said determining estimates of one or more first parameters being of use for estimating the performance of said communication system and one or more mechanisms for reducing or cancelling crosstalk between said at least two channels, said determining estimates being at least in part based on estimates of one or more second parameters ("operational parameters") of said communication system, said second parameters being determinable during operation of said communication system, the method comprising the steps of: (1) collecting said estimates of one or more second parameters; (2) computing estimates of said one or more first parameters based on said one or more second parameters, wherein preferably one or more of said estimates of said second parameters are determined during operation, and/or said one or more first parameters are useful (are a sufficient set) for determining estimates of one or more third parameters ("bitrates" and/or "noise levels") related to the performance of said communication system, in particular the effect of said one or more mechanisms for reducing or cancelling crosstalk between said at least two channels. Embodiments recognize the need and possibility to use estimates of one or more parameters ("operational parameters") of a communication system, said second parameters being determined during operation of said communication system for estimating the performance of said communication system, the communication system having at least two channels, said communication system being equipped with one or more mechanisms for reducing or cancelling crosstalk between said at least two channels, in particular the effect of said one or more mechanisms for reducing or cancelling crosstalk between said at least two channels.

Besides the above described methods the invention further provides a computer program product, operable on a processing engine, for executing any of the steps of the preceding methods claims and non-transitory machine readable storage medium storing the computer program products. Further systems with means to collect parameters (inputs) and computation means like general purpose or dedicated computation engines being capable to execute the methods are provided. Those systems may further comprise of means for inputting how in terms of reference and underlying working assumptions the effect of said one or more mechanisms for reducing or cancelling crosstalk between said at least two channels must be expressed by said estimates. The systems may further comprise of means for inputting the mode of operation of said communication system in terms of use of said mechanisms for reducing or cancelling crosstalk. The above system define a more advanced network analyser, comprising a first system of any of the preceding systems; and a second system or less advanced network analyser with network analysing capabilities, wherein said second system provides said second parameters to said first system.

Given the concept of scenarios are discussed above and the capabilities of the presented methods, various particular metrics can be defined to determine or qualify the effect of said one or more mechanisms for reducing or cancelling crosstalk between said at least two channels, either in absolute values or relative to a to be defined reference case, which can be a realistic case or a theoretical ideal case. The scenario can take into account the mode of operation of said communication system in terms of use of said mechanisms for reducing or cancelling crosstalk and therefore the step of selecting the set of first parameters to be determined may depend on said mode of operation.

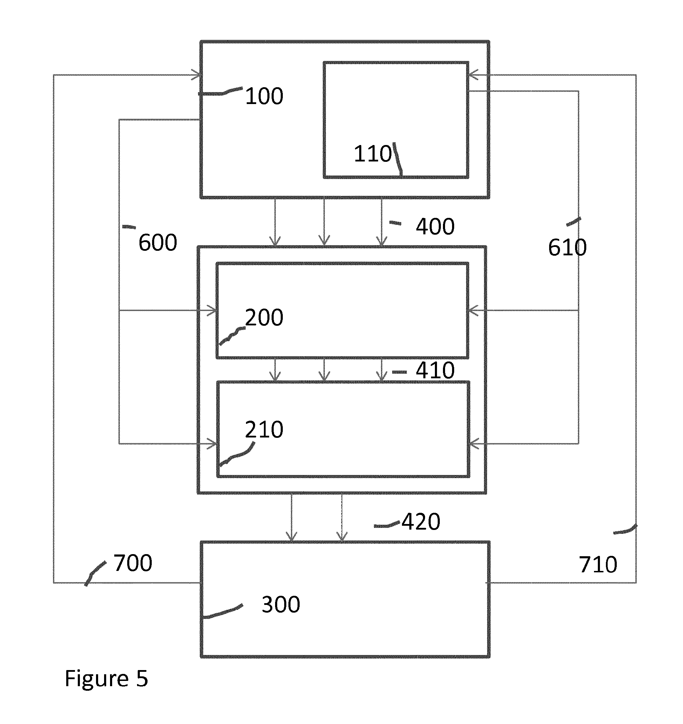

Figure 5 summarizes various method embodiments of the invention and shows a communication system 100, equipped with mechanisms 110, the computation of performance parameters 420 from operational parameters 400, optionally via the intermediate step of computing 200 of intermediate parameters 410 followed by computing step 210 and the potential use thereof by a control system 300. One or more (three are indicated) operational parameters 400 are used to compute one or more intermediate parameters 410 (three are indicated) to further determine one or more (two are indicated) performance related parameters 420. The computations use information from the system and the mechanisms used via signals 600 and/or 610 respectively. The control system 300 may use the performance measures to steer the system itself and/or to adapt the use of the mechanisms via the feedback signals 700 and/or 710, respectively.

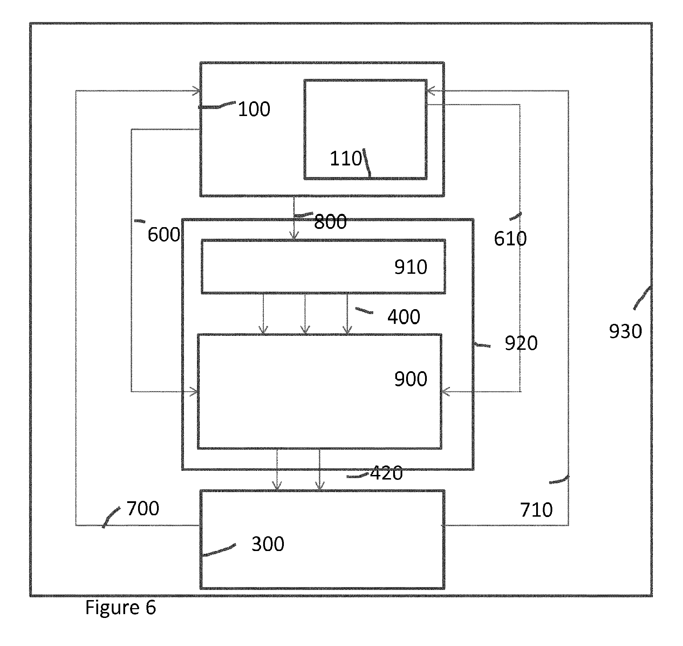

Figure 6 summarizes various systems embodiments of the invention and shows a communication system 100 equipped with mechanisms 110, a performance estimation system 900 fed with operational parameters 400 measured via a network analyser 610 coupled to the communication system via signal lines 800. The system 900 and 910 may be integrated, see reference numeral 920. Together the different modules may be fully integrated to form a feedback controlled communication system 930.

To conclude a few further preferred embodiments are described. A communication system performance estimation method is provided for determining estimates of one or more first parameters ("frequential vectors") of a communication system with a plurality of channels between an access node and a plurality of end user nodes and of use for estimating the performance of said communication system, the communication system having at least two channels, said communication system being equipped with one or more mechanisms for reducing or cancelling crosstalk between said at least two channels, said determining estimates of one or more first parameters further being of use for estimating the performance of mechanisms for reducing or cancelling crosstalk, said determining estimates being at least in part based on estimates of one or more second parameters ("operational parameters") of said communication system, said second parameters being determinable during operation of said communication system, the method comprising the steps of: (1) collecting said estimates of one or more second parameters during normal operation of the communication system, preferably in said access point; (2) computing estimates of said one or more first parameters on a per channel basis based on said one or more second parameters. In a further embodiment thereof said determining of said estimates of one or more first parameters further being of use for estimating the performance of the mechanisms for reducing or cancelling crosstalk irrespectively whether said mechanisms are active or inactive. In yet another embodiment thereof one of said second parameters is a crosstalk coefficient representative between said two channels. In yet another embodiment a method is provided for determining estimates of one or more third parameters ("bitrates" and/or "noise levels") related to the performance of said communication system, comprising the steps of: (1) determining estimates of one or more first parameters by any of the previous methods;(2) computing said estimates of one or more third parameters based on said estimates of one or more first parameters. In yet another embodiment a method is provided for determining estimates of one or more parameters of which at least one of said parameters being performance parameters ("bitrates" and/or "noise levels") (and optionally said first parameters like frequential vectors or parameters per channel) related to the performance of a communication system with a plurality of channels between an access node and a plurality of end user nodes, the communication system having at least two channels, said communication system being equipped with one or more mechanisms for reducing or cancelling crosstalk between said at least two channels, said determining of parameters further being of use for estimating the performance of said mechanisms for reducing or cancelling crosstalk, the method comprising the steps of (1) collecting said estimates of one or more second parameters during normal operation of the communication system, preferably in said access point; and (2) computing estimates of said one or more parameters of which at least one of said parameters being performance parameters based on said one or more second parameters.

In yet another embodiment a communication system performance estimation system is provided for determining estimates of one or more first parameters ("frequential vectors") of a communication system with a plurality of channels between an access node and a plurality of end user nodes and of use for estimating the performance of said communication system, the communication system having at least two channels, wherein said communication system being equipped with one or more mechanisms for reducing or cancelling crosstalk between said at least two channels, said determining estimates of one or more first parameters further being of use for estimating the performance of mechanisms for reducing or cancelling crosstalk, said determining estimates being at least in part based on estimates of one or more second parameters ("operational parameters") of said communication system, said second parameters being determinable during operation of said communication system, the system comprising of: (1) means for collecting said estimates of one or more second parameters during normal operation of the communication system;(2) means for computing estimates of said one or more first parameters on a per channel basis, based on said one or more second parameters.

In yet another embodiment the use is disclosed of estimates of one or more parameters ("operational parameters") of a communication system with a plurality of channels between an access node and a plurality of end user nodes, said second parameters being determined during normal operation of said communication system, for estimating the performance of said communication system, the communication system having at least two channels, said communication system being equipped with one or more mechanisms for reducing or cancelling crosstalk between said at least two channels, in particular for estimating the effect of said one or more mechanisms for reducing or cancelling crosstalk between said at least two channels.

Note that embodiments of the invention are applicable for various arrangements in that the collection of information (estimates) and the actual computing can happen at different or the same place. Embodiments of the invention are applicable for a downstream case, an upstream case and even a combination of those. Indeed in the various arrangements and cases the access node and CPE's have typically means (a predefined communication protocol) for communication, so collected parameters at one or another end can be brought together to perform computing thereon. The use of such communication enables also various possibilities for determining the power estimate, be it by measuring on a certain end directly or measuring it on another end and providing the captured information thereon, hence both received and/or transmitted power can be used.

**Claims**

1. A method for estimating at least one performance parameter of a communication system with a plurality of channels between an access node and a plurality of end user nodes, said communication system being equipped with an internal crosstalk cancellation mechanism for reducing or cancelling internal crosstalk between said plurality of channels, the method comprising:

   collecting estimates, preferably at said access point, for at least one operational parameter of said communication system during normal operation of the communication system; and
   computing said at least one performance parameter based on the collected estimates for the at least one operational parameter.

2. The method of claims 1, wherein said at least one performance parameter is a bit rate and/or a noise level.

3. The method of claim 1 or 2, wherein the at least one performance parameter comprises:

   - a bit rate and/or noise level for a situation where said internal crosstalk cancellation mechanism is inactive, and/or

- a bit rate and/or noise level for a situation where the internal crosstalk cancellation mechanism is active.

4. The method of any of the preceding claims, wherein said at least one operational parameter comprises:

   - a parameter representative for an electrical length or a parameter representative for an attenuation; and
   - a parameter representative for an actual used power.

5. The method of any of the preceding claims, wherein said at least one operational parameter comprises for each pair of channels of the plurality of channels, a crosstalk coefficient representative for far-end cross talk.

6. The method of any one of the previous claims, wherein said computing comprises:

   computing a set of far-end crosstalk values expressing far-end crosstalk between each pair of channels of said plurality of channels based on said at least one operational parameter; and
   using said set of far-end crosstalk values for computing the at least one performance parameter for each channel.

7. The method of any one of the previous claims, wherein said computing comprises:

   computing a direct transfer function for a channel of the plurality of channels based on said at least one operational parameter; and
   using said direct transfer function for computing the at least one performance parameter for said channel.

8. The method of any one of the previous claims, wherein said computing comprises:

   computing a power spectral density for a channel of the plurality of channels based on said at least one operational parameter; and
   using said power spectral densities for computing the at least one performance parameter for said channel.

9. A computer program product, operable on a processing engine, for executing any of the steps of the preceding methods claims.

10. A non-transitory machine readable storage medium storing the computer program products of claim 9.

11. A performance estimation system for estimating at least one performance parameter of a communication system with a plurality of channels between an access node and a plurality of end user nodes, said communication system being equipped with an internal crosstalk cancellation mechanism for reducing or cancelling internal crosstalk between said plurality of channels, the network analyzing system comprising:

    a measurement device configured for collecting, preferably at said access point, estimates for at least one operational parameter of said communication system during normal operation of the communication system; and
    a computing module configured for computing said at least one performance parameter based on the collected estimates for the at least one operational parameter.

12. The performance estimation system of claim 11, wherein said computing module is configured for computing a bit rate and/or a noise level, preferably

    - a bit rate and/or noise level for a situation where said internal crosstalk cancellation mechanism is inactive, and/or
    - a bit rate and/or noise level for a situation where the internal crosstalk cancellation mechanism is active.

13. The performance estimation system of claim 11 or 12, said measurement device is configured for collecting estimates for:

    - a parameter representative for an electrical length or a parameter representative for an attenuation; and
    - a parameter representative for an actual used power;
    - and preferably, for each pair of channels of the plurality of channels, a crosstalk coefficient representative for far-end cross talk.

**14.** The performance estimation system of any one of the claims 11-13, wherein said computing module is configured for computing a set of far-end crosstalk values expressing far-end crosstalk between each pair of channels of said plurality of channels based on said at least one operational parameter; and for using said set of far-end crosstalk values for computing the at least one performance parameter for each channel.

**15.** Use of at least one operational parameter of a communication system with a plurality of channels between an access node and a plurality of end user nodes, said communication system being equipped with an internal crosstalk cancellation mechanism for reducing or cancelling internal crosstalk between said plurality of channels, wherein said at least one operational parameter is collected during normal operation of the communication system, preferably at said access point, for estimating at least one performance parameter of said communication system.

Alien system

Alien crosstalk

Internal crosstalk

Vectoring group

# Figure 1

Figure 2

**Bitrates estimation**

Electrical length → Estimate Hlog

Actual transmitted power →
Actual mask → Estimate TxPSD

Crosstalk coefficients in the heatmap →
Electrical length → Estimate FEXT coming from all disturbers

Estimate environment noise
↑
Attainable bitrate

Scenario 1 (FEXT-FREE)

Scenario 2 (FULL-FEXT)

Scenario 3 (FULL-CANCELLATION)

Figure 3

Figure 4

Figure 5

Figure 6

Europäisches
Patentamt
European
Patent Office
Office européen
des brevets

## EUROPEAN SEARCH REPORT

Application Number

EP 13 30 6636

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2007/130877 A2 (ASSIA INC [US]; AT & T KNOWLEDGE VENTURES LP [US]; GINIS GEORGE [US];) 15 November 2007 (2007-11-15) <br> * paragraph [0004] * <br> * paragraph [0021] * <br> * paragraph [0035] * <br> * paragraph [0059] * <br> * paragraph [0064] * <br> * claims 1,2,7, 11 * <br> * figures 1-17 * | 1-15 | INV. <br> H04B3/46 <br> H04M3/22 <br> H04M3/30 <br><br> ADD. <br> H04M11/06 |
| X <br><br> A | WO 2010/140945 A1 (ERICSSON TELEFON AB L M [SE]; FERTNER ANTONI [SE]; ERICSON KLAS [SE];) 9 December 2010 (2010-12-09) <br> * page 3, line 8 - page 4, line 21 * <br> * page 11, line 11 - page 14, line 26 * <br> * page 20, line 28 - page 22, line 20 * <br> * claims 1,5,7 * <br> * figures 1-11 * | 1-5,7-15 <br><br> 6 | |
| X <br><br> A | WO 2011/142741 A1 (ADAPTIVE SPECTRUM & SIGNAL [US]; FLOWERS MARK B [US]; BRADY MARK H [US]) 17 November 2011 (2011-11-17) <br> * page 16, line 12 - page 19, line 11 * <br> * figures 4-7 * | 1,9,11, 15 <br><br> 2-8,10, 12-14 | TECHNICAL FIELDS SEARCHED (IPC) <br><br> H04B <br> H04M |

The present search report has been drawn up for all claims

| Place of search | Date of completion of the search | Examiner |
|---|---|---|
| The Hague | 11 April 2014 | Amadei, Davide |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 13 30 6636

This annex lists the patent family members relating to the patent documents cited in the above-mentioned European search report.
The members are as contained in the European Patent Office EDP file on
The European Patent Office is in no way liable for these particulars which are merely given for the purpose of information.

11-04-2014

| Patent document cited in search report | | Publication date | Patent family member(s) | | Publication date |
|---|---|---|---|---|---|
| WO 2007130877 | A2 | 15-11-2007 | AU | 2007248256 A1 | 15-11-2007 |
| | | | BR | PI0709756 A2 | 26-07-2011 |
| | | | CA | 2651247 A1 | 15-11-2007 |
| | | | CN | 101517965 A | 26-08-2009 |
| | | | CN | 101523804 A | 02-09-2009 |
| | | | CN | 101523882 A | 02-09-2009 |
| | | | EP | 2025115 A2 | 18-02-2009 |
| | | | EP | 2033368 A2 | 11-03-2009 |
| | | | EP | 2036249 A2 | 18-03-2009 |
| | | | EP | 2388984 A1 | 23-11-2011 |
| | | | JP | 5023144 B2 | 12-09-2012 |
| | | | JP | 2009535999 A | 01-10-2009 |
| | | | JP | 2009536000 A | 01-10-2009 |
| | | | JP | 2009536001 A | 01-10-2009 |
| | | | US | 2009161741 A1 | 25-06-2009 |
| | | | US | 2009168972 A1 | 02-07-2009 |
| | | | US | 2010166051 A1 | 01-07-2010 |
| | | | WO | 2007130877 A2 | 15-11-2007 |
| | | | WO | 2007130878 A2 | 15-11-2007 |
| | | | WO | 2007130879 A2 | 15-11-2007 |
| WO 2010140945 | A1 | 09-12-2010 | EP | 2438686 A1 | 11-04-2012 |
| | | | US | 2012069883 A1 | 22-03-2012 |
| | | | WO | 2010140945 A1 | 09-12-2010 |
| WO 2011142741 | A1 | 17-11-2011 | AU | 2010352855 A1 | 29-11-2012 |
| | | | CA | 2798809 A1 | 17-11-2011 |
| | | | CN | 102884780 A | 16-01-2013 |
| | | | EP | 2569929 A1 | 20-03-2013 |
| | | | JP | 2013531410 A | 01-08-2013 |
| | | | US | 2013170629 A1 | 04-07-2013 |
| | | | WO | 2011142741 A1 | 17-11-2011 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2383899 A